# FASCICULE DE BREVET EUROPEEN

(11) **EP 3 469 247 B1**
(45) Date de publication et mention de la délivrance du brevet: **17.06.2020**
(21) Numéro de dépôt: 17717396.0
(22) Date de dépôt: 12.04.2017
(51) Int. Cl.: F16L 55/40, F16L 55/30, F16L 101/12, F16L 101/16, F16L 101/30, B08B 9/049

(54) **ROBOT POUR LA RENOVATION DE CONDUITES FORCEES, MUNI D'UN SYSTEME ANTI-VRILLE DE DEPLACEMENT**
ROBOTER ZUR SANIERUNG VON DRUCKROHRLEITUNGEN, AUSGESTATTET MIT EINEM VERDREHSICHEREN BEWEGUNGSSYSTEM
ROBOT FOR RENOVATING PENSTOCKS, PROVIDED WITH AN ANTI-TWISTING MOVING SYSTEM

(30) Priorité: 13.06.2016 FR 1655402
(43) Date de publication de la demande: 17.04.2019
(73) Titulaire: Battakarst, 38342 Voreppe Cedex (FR)
(72) Inventeur: PRAT, Pascal, 07200 Lachapelle-Sous-Aubenas (FR); BONY, Olivier, 26400 Allex (FR)
(74) Mandataire: Nony
(86) Numéro de dépôt international: PCT/EP2017/058727
(87) Numéro de publication internationale: WO 2017/215810

(56) Documents cités:
- CN-A- 103 697 285
- FR-A1- 2 638 813
- KR-A- 20160 023 960
- US-A1- 2005 007 055
- US-A1- 2012 215 348

## Description

### Domaine technique

La présente invention concerne le domaine général des robots d'inspection et/ou de rénovation des tuyaux.

Elle concerne plus particulièrement le domaine de la rénovation par décapage et le cas échéant revêtement de peinture de canalisations, en particulier des conduites dites forcées. Une conduite forcée est une conduite hydraulique constituée par un assemblage de tuyaux, destinée à transporter de l'eau sous pression jusqu'à une centrale hydroélectrique située en aval et en contrebas de la retenue d'eau qui l'alimente.

La présente invention vise plus particulièrement à améliorer le déplacement des robots destinés à la rénovation de conduites, afin d'éviter le phénomène de dérive angulaire ou de vrille des robots dans les conduites.

Bien que décrite en référence à une application avantageuse de rénovation d'une conduite forcée, l'invention s'applique à tout robot destiné à tout type d'inspections et/ou de travaux de réparation des tuyaux ou autres conduits de différentes tailles et géométries qui doivent être réalisés, sans tranchée.

### Art antérieur

Un grand nombre de tuyaux de plus ou moins grand diamètre sont largement utilisés de nos jours dans un spectre large d'industries. Par exemple, les collectivités locales peuvent utiliser des tuyaux de grand diamètre pour le drainage des eaux pluviales et la gestion de l'eau, en général. L'industrie du pétrole et du gaz, ainsi que l'industrie de la production d'énergie, utilisent ces tuyaux pour le transport de pétrole et de gaz. Les centrales hydroélectriques utilisent très largement des tuyaux de grand diamètre, les conduites dites forcées pour le transport d'eau sous pression.

Bien que nombreuses et variées dans leur contraintes et leurs mises en œuvre, toutes les industries utilisant des tuyaux sont confrontées aux mêmes défis: des durées de vie limitées de tuyauterie, les coûts de réparation élevés, les grandes interruptions de service, l'impact majeur de l'infrastructure, la sécurité du personnel, et l'efficacité de la réparation.

On peut distinguer les conduits en fonction de leur diamètre puisque pour des diamètres relativement petits, typiquement inférieurs à environ 1,30 mètres, le nettoyage et/ou l'inspection manuels sont quasiment impossibles tandis que pour des diamètres supérieurs à environ 1,30 mètres, ces opérations restent possible théoriquement manuellement car accessibles par une personne humaine.

Certaines méthodes d'inspection visuelles et de rénovation classiques de tuyaux de relativement grand diamètre consistent à utiliser une entrée pour qu'un être humain puisse inspecter visuellement et le cas échéant, procéder à réparation et/ou à la maintenance manuelle de la paroi interne de la conduite.

Outre l'inconvénient évident que ce type de méthodes classiques se limite donc par définition à des tuyaux de relativement grand diamètre, il peut présenter un certain nombre d'inconvénients, y compris pour les personnes intervenantes soumises à des conditions contraignantes à l'intérieur de ces espaces confinés.

L'utilisation de robots pour le nettoyage et/ou l'inspection de canalisations, conduites et tuyaux divers et variés est déjà connue.

On peut citer ici l'inspection et le nettoyage intérieur de conduits d'air de ventilation et/ou d'air conditionné, les tuyaux de type « pipeline », les conduites de distribution d'eau potable, les conduites de gaz sous pression et les canalisations des réseaux d'égouts.

La société déposante de la présente demande a cherché à définir un robot pour la rénovation avec décapage et le cas échéant revêtement de peinture des conduites forcées dont les diamètres peuvent être aussi bien petits, c'est-à-dire inférieurs à 1,3 m, que grands.

Ces conduites forcées sont généralement constituées de tubes métalliques assemblés le long d'une pente et qui sont protégés par des revêtements extérieurs et intérieurs.

Il est nécessaire d'entretenir régulièrement ces conduites forcées et notamment de renouveler la protection intérieure en éliminant le revêtement intérieur existant ainsi que les éventuelles oxydations et en le remplaçant par un nouveau.

En général, l'entretien ou rénovation consiste à réaliser une préparation de surface en adéquation avec l'application d'un nouveau revêtement de peinture. Cette préparation peut par exemple consister en un décapage avec une projection d'abrasif, aussi généralement appelé grenaillage, qui permet de créer une certaine rugosité de surface pour l'accroche et l'application d'un nouveau revêtement de peinture.

Ces opérations sont actuellement effectuées manuellement et sont particulièrement pénibles, voir dangereuses. En particulier, les opérateurs travaillent dans un milieu clos et les revêtements qu'ils doivent enlever sont susceptibles de contenir des substances toxiques comme par exemple de l'amiante ou des métaux lourds. Il peut en être de même pour les revêtements qui viennent en remplacement, par exemple à cause des solvants utilisés.

De plus, ce travail doit être relativement précis car les outils utilisés, par exemple pour le décapage les lances à eau sous ultra haute pression (UHP), à environ 3000 bars ou les lances de grenaillage, ont une zone d'action relativement limitée et l'attention de l'opérateur doit être soutenue. Il en résulte que ces opérations peuvent prendre un temps considérable à la fois pour le travail et les vérifications d'autant plus que les conduites forcées peuvent être d'une grande longueur, jusqu'à mesurer plusieurs kilomètres.

Le demandeur a donc souhaité automatiser cet entretien ou rénovation de ces conduites et mettre en œuvre un robot qui puisse effectuer ces opérations de rénovation.

Toutefois, le cahier des charges imposé pour un tel robot est strict et conséquent, du fait notamment des contraintes fortes intrinsèques aux conduites forcées.

En particulier, en ce qui concerne les moyens de déplacement, un tel robot doit répondre aux spécifications suivantes :
- il doit se déplacer à l'intérieur d'une conduite par ses propres moyens et en supportant des charges conséquentes, notamment en vue d'être autonome en réservoirs de peinture pour le revêtement;
- il doit être facilement adaptable à une gamme de diamètres de conduites différents ;
- il doit pouvoir avancer ou reculer, monter ou descendre, même dans des conduites à très forte inclinaison, voire à la verticale ;
- il doit être capable de s'auto-maintenir dans les conduites, c'est-à-dire par ses propres moyens cela y compris dans des conduites à très forte inclinaison, comme les conduites à la verticales ;
- ses principaux paramètres de déplacement (vitesses, cycles...) doivent pouvoir être ajustés précisément et à distance par un opérateur ;
- il doit être capable de passer de petits obstacles internes, inhérents aux conduites qui forment des irrégularités sur la paroi intérieure des conduites, comme par exemple des têtes de rivets assemblant deux tuyaux adjacents ;
- il doit être capable de passer, par ses propres moyens, les changement d'inclinaison des tuyaux, c'est-à-dire des coudes susceptibles d'être présents dans les conduites forcées, avec notamment un rayon de courbure de coudes pouvant être au minimum égal à 3 fois le diamètre de la conduite.

Les inventeurs de la présente invention ont ainsi fait l'inventaire des solutions existantes.

Ils sont tout d'abord parvenus à la conclusion qu'aucun des systèmes robotisés ou mécanisés existant n'était en mesure de satisfaire à toutes les exigences ci-dessus simultanément.

Ainsi, pour les solutions proposées pour les conduites de faible diamètre, les robots déjà proposés sont surtout pour l'inspection des conduites et parmi les quelques robots de rénovation identifiés, ceux-ci ne peuvent supporter que de faibles charges et présentent très probablement des difficultés dans des conduites à forte inclinaison.

La demande de brevet US2005/007055 divulgue un robot pour traverser des obstacles ayant un corps allongé, rond et flexible qui comprend une pluralité de segments interconnectés par des joints universels à deux degrés de liberté.

La demande de brevet EP0647812 A1 divulgue en particulier un robot de travail pour une gamme de diamètres de conduites entre 400 et 800mm, dont la mise en œuvre est limitée aux conduites horizontales et sans coudes.

Le brevet EP 0378480B1 divulgue quant à lui un robot d'inspection pour une gamme de diamètres de conduites entre 500 et 1000 mm, qui peut certes se déplacer dans des conduites à la verticale mais avec nécessairement des petits coudes.

Les demandes de brevet US2012/090111 et US2015/121646 et le brevet US8794636B2 décrivent un robot d'inspection pour une gamme de diamètres de conduites entre 700 et 900 mm, qui est sensible à des petites variations de surfaces et qui offre des déplacements peu précis.

Le brevet EP1245692B1 concerne un robot de travail mécanisé pour une gamme de diamètres de conduites entre 800 et 2000 mm, certes robuste mais qui nécessite un déplacement manuel, c'est-à-dire un portage manuel à l'intérieur de la conduite.

La demande de brevet WO2011/009420 concerne un robot de travail pour une large gamme de diamètres de conduites entre 360 et 1300 mm, également robuste et à déplacement relativement aisé dans tous les profils de conduites, mais peu enclin à supporter des charges conséquentes.

Pour les conduites de plus grand diamètre, la plupart des solutions de travail automatisées existantes sont conçues pour des conduites horizontales et sans coudes. Pour les conduites forcées, il n'existe commercialement que des solutions mécanisées.

Ainsi, la demande de brevet AU2015207819A1 concerne un robot de travail pour une gamme de diamètres de conduites entre 600 et 4000 mm, limitées à celles des réseaux d'eau linéaires, horizontales et sans coudes.

Le brevet US8633713B2 divulgue un robot de travail automatisé pour une gamme de diamètres de conduites entre 1000 et 1800 mm, certes robuste et fiable mais limité à des conduites de pipeline linéaires et sans coudes. Ce robot a en outre comme inconvénient d'être encombrant.

La demande de brevet WO2016/014566 concerne un robot de travail automatisé pour une gamme de diamètres de conduites entre 1300 et 3000 mm, limitées à celles à faible coude.

Les robots mécanisés avec des lances de nettoyage sous UHP commercialisés par les sociétés HUBERT et ETTER d'une part et DONELLI d'autre part, sont des solutions qui sont conçues sans automatisation, sur mesure uniquement pour un chantier de rénovation donné et qui nécessitent un guidage par treuil depuis l'extérieur de la conduite.

Le brevet EP2503208B1 concerne un robot destiné à la rénovation de conduites forcées pour une gamme de diamètres entre 1800 et 3000 mm, qui n'est pas automatisé et qui nécessite ici encore l'utilisation d'un treuil.

La demande de brevet RO130410 enfin divulgue un robot de rénovation de conduites forcées pour une gamme de diamètres entre 1500 et 3000 mm, qui est certes très léger, mais peu robuste et peu résistant à un environnement de travail en conditions sévères.

Le brevet FR2638813B1 concerne un robot destiné à la rénovation de conduites forcées pour une gamme de diamètres entre 1300 et 1800 mm, qui semble lourd et pas enclin à être mis en œuvre dans des conduites à forte inclinaison notamment à la verticale. En outre, le robot divulgué n'offre pas une zone de travail déportée, ce qui peut être nuisible au robot lui-même.

En plus des inconvénients précités, les inventeurs de la présente invention ont pu mettre en exergue qu'après un passage d'un coude ou par l'effet d'une dérive lente de déplacement, tous les robots proposés selon l'état de l'art peuvent changer d'orientation longitudinale par rapport à l'axe de la conduite dans laquelle ils se déplacent, ou autrement dit se déplacer selon un mouvement en hélice non souhaité, que l'on nomme ci-après vrille. Or, un déplacement en vrille induit des inconvénients majeurs. Tout d'abord la position de l'outillage ne peut être contrôlée précisément, Il en va de même avec la position des chenilles sur la paroi de la conduite, ce qui induit un passage d'obstacles qui n'est pas détecté de manière fiable.

Il existe donc un besoin d'améliorer les robots destinés à l'inspection et/ou au nettoyage, notamment par décapage avec le cas échéant un revêtement de peinture des conduites dans lesquelles ils se déplacent, plus particulièrement les conduites forcées, notamment afin de répondre au cahier des charges précité, et d'éviter à tout le moins réduire le déplacement en vrille lors du déplacement dans lesdites conduites.

Le but de l'invention est de répondre au moins en partie à ce besoin.

### Exposé de l'invention

Pour ce faire, l'invention concerne, sous l'un de ses aspects, un robot pour la rénovation et/ou l'inspection d'une conduite, comprenant un châssis lui-même comprenant:
- deux sous-châssis de déplacement s'étendant selon un axe longitudinal et supportant chacun trois pieds de déplacement formant un tripode, chaque pied du tripode s'étend selon un axe longitudinal et comprend, à son extrémité libre, une chenille de déplacement, destinée à déplacer le robot par appui contre la paroi d'une conduite,
- un sous-châssis de liaison formant joint de cardan reliant les deux sous-châssis et adapté pour permettre de pivoter un sous-châssis de déplacement par rapport à l'autre selon deux degrés de liberté.

Selon l'invention, au moins un des deux sous-châssis de déplacement supporte en outre :
- une couronne de pivotement montée rotative autour de l'axe longitudinal dudit sous-châssis et est reliée par au moins une bielle de liaison à chaque pied du tripode lui-même monté rotatif autour de son axe longitudinal;
- au moins un vérin, dit vérin d'orientation, dont une extrémité est au sous-châssis et l'autre extrémité à la couronne, de sorte que son actionnement provoque la rotation de la couronne et par là, par l'intermédiaire des bielles, le pivotement simultané des pieds du tripode autour de leur axe longitudinal respectif.

Selon un mode de réalisation avantageux, chacun des deux sous-châssis de déplacement comprend une couronne de pivotement et au moins un vérin de rotation, l'actionnement du (des) vérin(s) de rotation de la couronne de l'un des deux sous-châssis étant indépendant de l'autre.

De préférence, chaque pied d'un tripode comprenant un moteur d'entraînement indépendant de la chenille dudit pied. Dans les phases transitoires de passage de coudes, chaque pied n'a pas la même distance à parcourir, les moteurs entraînant les pieds doivent donc tourner à des vitesses différentes en fonction de leur position par rapport au centre du rayon du coude. L'asservissement des vitesses relatives des moteurs d'entraînement peut se faire de préférence en affectant la fonction de maître à l'un des pieds, qui est piloté en régulation de vitesse. Les variateurs des autres moteurs sont alors les esclaves du variateur de vitesse du pied maître et fonctionnent alors en partage de couple, c'est-à-dire que la vitesse est auto-adaptée en fonction du couple demandé par le moteur.

Afin d'adapter le robot de manière simple et rapide à des diamètres de conduites différents, il est prévu avantageusement que chaque pied d'un tripode comprenne une rallonge réglable pour permettre de régler la longueur du pied selon son axe longitudinal afin d'ajuster le tripode au diamètre de la conduite forcée.

Selon une variante avantageuse, chaque pied d'un tripode comprenant une partie fixée au sous-châssis de déplacement et une partie mobile en translation selon l'axe longitudinal du pied, la partie mobile supportant la chenille de déplacement et le cas échéant son moteur d'entraînement et/ou la rallonge réglable étant agencée par rapport à la partie fixe en formant un logement d'un ou plusieurs ressorts de compression dite boite à ressort(s), la boite à ressort(s) étant adaptée pour permettre le maintien en pression de la chenille du pied contre la paroi de la conduite.

Ainsi, l'invention consiste essentiellement à définir un robot robuste à double tripode dont les chenilles, de préférence chacune motorisées, assurent un auto-portage et un déplacement fiable et précis, même dans des conduites à très forte inclinaison, voire à la verticale et qui est muni d'un système anti-vrille conçu de manière simple et efficace avec la couronne de pivotement et le vérin d'actionnement. Les vérins d'actionnement sont de préférence des vérins électriques.

L'action simultanée de la couronne de pivotement permet de donner un angle d'orientation identique pour tous les pieds d'un même tripode à l'avant et/ou à l'arrière du robot, typiquement inférieur ou égal à 5°.

Le passage d'un coude est détecté de préférence par deux systèmes à balayage laser placés l'un sur le tripode avant et l'autre sur le tripode arrière.

Après détection, on réalise une commande télé-opérée par un opérateur ou de manière automatique qui va modifier simultanément l'orientation des pieds d'un même tripode selon une valeur calculée et éviter le phénomène de vrille. Pour la détection, on peut prévoir avantageusement, deux capteurs de types inclinomètres qui permettent de détecter une déviation générale dans l'axe de la conduite de la position angulaire du robot par rapport à une consigne initiale. Le signal récupéré de ces inclinomètres par l'unité de commande du robot sert à commander un ordre de correction de position de l'assiette générale du robot par l'intermédiaire des vérins d'actionnement. Ces vérins électriques actionnent chacun leur couronne de direction respective qui agit donc sur l'orientation radiale des trois chenilles asservies et montées sur chaque tripode.

De cette façon, on garantit que le bras support donc l'outillage de rénovation et/ou la caméra d'inspection sont bien positionnées dans la zone souhaitée.

Selon un mode de réalisation avantageux, le robot comprend en outre au moins un vérin dit vérin de direction, dont une extrémité est reliée à un sous-châssis de déplacement et l'autre extrémité à l'un des axes du cardan, de sorte que son actionnement provoque le pivotement dudit sous-châssis par rapport à l'autre selon un degré de liberté du joint de cardan.

Le fait de prévoir un joint à cardan entre les deux tripodes est avantageux car il permet au robot de continuer sa progression dans une conduite même en présence d'un coude. Lorsque l'on avance dans un coude au moins l'un des tripodes va se décaler par rapport à l'axe théorique de la conduite forcée. Ce décalage peut être aisément détecté par un système de type à balayage laser et l'unité de contrôle-commande du robot peut alors piloter l'un et/ou l'autre des vérins de direction afin de ramener l'axe du tripode concerné sur l'axe longitudinal de la conduite.

Selon un mode de réalisation, un des sous-deux châssis de déplacement supportant un bras-support d'outillage et/ou de caméra d'inspection, le bras-support étant monté rotatif à 360° autour de l'axe longitudinal dudit sous-châssis.

De préférence, selon ce mode le bras-support peut en outre être monté libre en translation longitudinal selon l'axe longitudinal du sous-châssis de déplacement qui le supporte. On peut ainsi prévoir de réaliser un bras-support télescopique ce qui permet d'éloigner à une certaine distance l'outillage de rénovation du reste du robot et donc garantir qu'aucune projection de produit de rénovation (grenaille et/ou peinture) ne vient encrasser le reste du robot.

L'invention concerne également sous un autre de ses aspects, un procédé de fonctionnement d'un robot selon l'une des revendications précédentes, en déplacement à l'intérieur d'une conduite, comprenant les étapes suivantes :
- détection et mesure d'un angle de dérive angulaire de l'un et/ou l'autre des sous-châssis de déplacement par rapport à l'axe de la conduite ;
- actionnement du (des) vérin(s) d'orientation, de sorte à provoquer le pivotement simultané des pieds de l'un et/ou l'autre des tripodes, autour de leur axe longitudinal respectif.

L'invention concerne enfin sous un autre de ses aspects, l'utilisation du robot décrit ci-avant pour la rénovation avec décapage, de préférence par grenaillage, et le cas échéant avec revêtement de peintures de conduites forcées.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en perspective d'un robot selon l'invention destiné à l'inspection et à la rénovation de conduites forcées, la figure 1 montrant le bras-support d'outillage de rénovation dans une position repliée ;
- la figure 2 est une vue en perspective du robot selon la figure 1, la figure 2 montrant le bras-support d'outillage de rénovation dans une position déployée ;
- les figures 3A, 3B et 3C sont des vues en perspective différentes parties du châssis de déplacement d'un robot selon l'invention, à savoir respectivement une partie du sous-châssis arrière, du sous-châssis avant et du sous-châssis central de liaison par cardan;
- la figure 4 est une vue de détail en perspective d'un pied avec sa chenille de déplacement d'un des tripodes de déplacement du robot ;
- la figure 5 est une vue de détail en perspective d'un des tripodes de déplacement du robot avec la couronne d'orientation simultané des trois de ce tripode;
- la figure 6 est une vue de détail en coupe d'une variante de partie d'un pied avec sa chenille de déplacement, consistant en une boîte à ressorts de compression adaptée pour permettre le maintien en pression du pied contre la paroi d'une conduite forcée ;
- les figures 7A et 7B sont des vues en coupe longitudinale respectivement de la partie fixée au sous-châssis et la partie mobile formant à elles deux le logement de la boite à ressorts.

On précise que les termes « avant » et « arrière» se réfèrent à un sens du déplacement d'un robot selon l'invention dans une conduite forcée. Dans l'exemple illustré, le déplacement du robot est réversible : aussi, il va de soi qu'une partie du robot, telle qu'un tripode, désignée avant, dans un sens de déplacement du robot dans la conduite devient une partie arrière dans le sens de déplacement opposé.

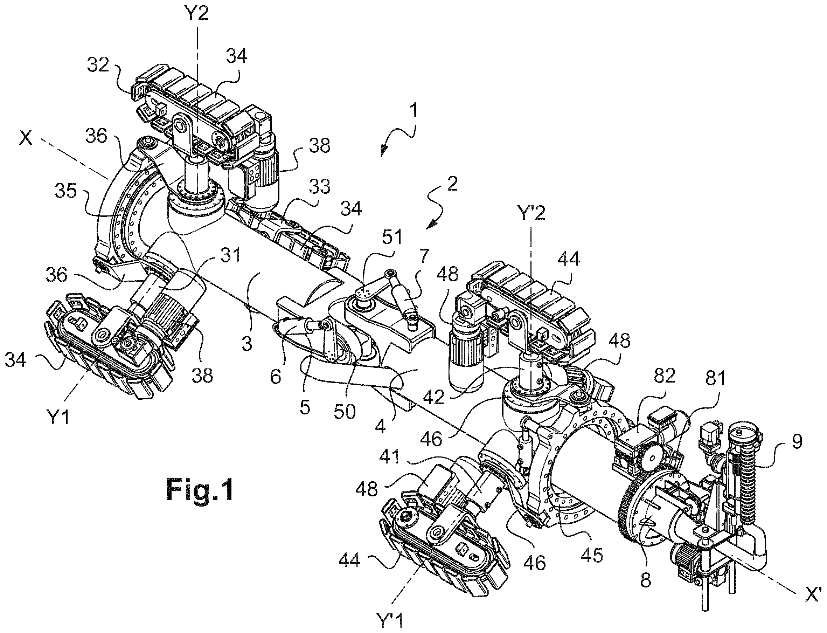

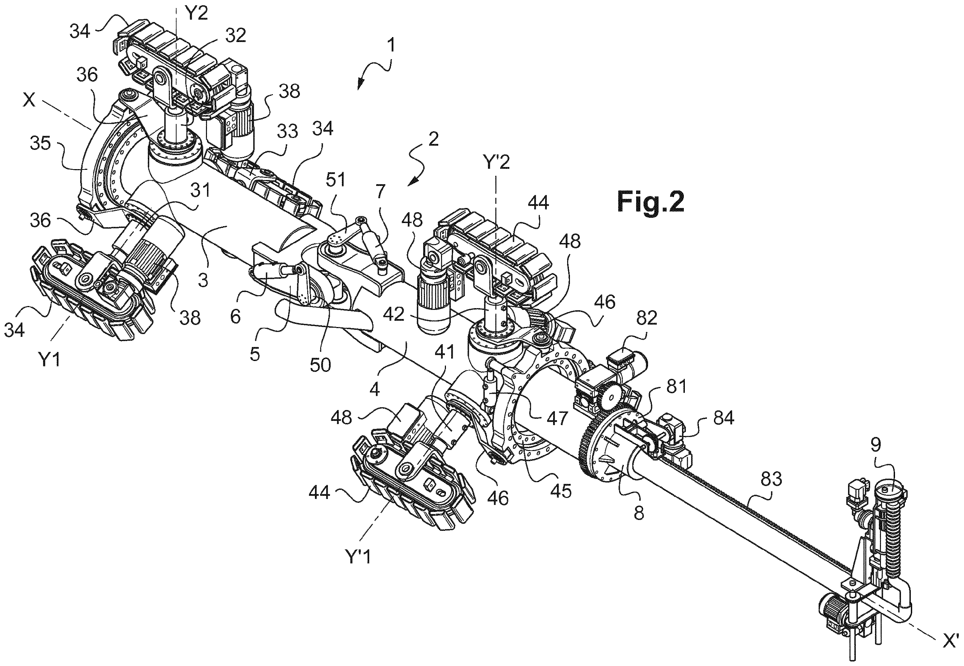

On a représenté aux figures 1 et 2, un robot selon l'invention destiné à réaliser l'inspection par caméra et/ou la rénovation avec décapage par grenaillage suivie le cas échéant d'un revêtement de peinture de conduites forcées.

Le robot 1 comprend un châssis 2 avec deux sous-châssis de déplacement 3 ; 4 supportant chacun trois pieds de déplacement 31 à 33; 41 à 43 formant un tripode.

Chaque pied du tripode 31 à 33; 41 à 43 s'étend selon un axe longitudinal Y1 à Y3 ; Y'1 à Y'3 et comprend, à son extrémité libre, une chenille de déplacement 34; 44, destinée à déplacer le robot par appui contre la paroi d'une conduite. Chaque pied du tripode est monté rotatif autour de son axe longitudinal Y1 à Y3; Y'1 à Y'3.

Un sous-châssis de liaison formant joint de cardan 5 relie les deux sous-châssis 3 et 4. Ce joint de cardan 5 est adapté pour permettre de pivoter un sous-châssis de déplacement 3 par rapport à l'autre 4 selon deux degrés de liberté. Comme détaillé ci-après, au passage d'un coude, pour diriger le robot 1 par rapport à l'axe de la conduite forcée dans laquelle il se déplace, il est prévu, deux vérins de direction 5, 6. Chacun de ces deux vérins 5, 6 a une extrémité reliée à un sous-châssis 3, 4 et l'autre extrémité reliées à l'un des axes 50, 51 du cardan 5.

Selon l'invention, il est prévu sur chacun des deux sous-châssis de déplacement 3 ; 4, une couronne de pivotement 35; 45 qui est montée rotative autour de l'axe longitudinal X ; X' dudit sous-châssis et est reliée par au moins une bielle de liaison 36 ; 46 à chaque pied du tripode, et un vérin d'orientation 37 ; 47, dont une extrémité est au sous-châssis et l'autre extrémité à la couronne 35 ; 45. L'actionnement du vérin d'orientation 37 de la couronne 35 du sous-châssis arrière 3 est indépendant du vérin 47 d'orientation 47 de la couronne 45.

Le sous-châssis avant 4 supporte un bras-support 8 d'outillage et/ou de caméra d'inspection. En particulier, tel qu'illustré en figures 1 et 2, ce bras 8 supporte une cloche d'aspiration et de grenaillage 9. A l'intérieur de cette cloche 9, de la grenaille, en tant qu'abrasif de décapage de la paroi intérieure de conduite, peut être projetée et récupérée par aspiration. La structure et le fonctionnement de cette cloche9 ne sont pas décrits ici en détail. On pourra se reporter à la demande de brevet déposée ce jour au nom du déposant et intitulée « *Robot pour rénovation de conduites forcées, muni d'un cloche de projection de grenaille et d'aspiration de la grenaille projetée ».*

Une couronne dentée 81 en engrènement avec un moteur d'entraînement 82 permettant la rotation sur 360° du bras-support 8 autour de l'axe longitudinal X' du sous-châssis 4. Le bras-support 8 est en outre télescopique car entraîné par l'intermédiaire d'une crémaillère 83 et d'un moteur d'entraînement associé. Ainsi, l'outillage de rénovation, comme la cloche 9 peut être éloignée par translation selon l'axe longitudinal X' du sous-châssis 4 qui le supporte.

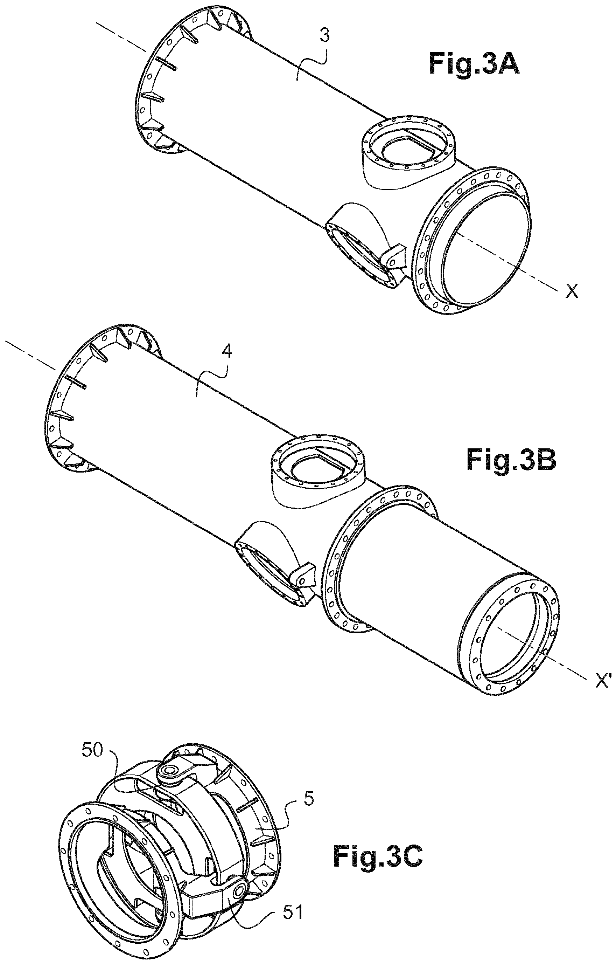

La structure du sous-châssis arrière est montrée en détail en figure 3A. Il s'agit essentiellement d'un tube s'étendant selon un axe longitudinal X dont le diamètre intérieur permet le passage des tuyaux d'alimentation en fluides et en électricité des différents composants du robot 1. L'avant du tube comprend une platine d'interface avec le joint de cardan central 5. La partie centrale du tube comprend trois platines d'interface réparties à 120° l'une de l'autre sur la périphérie du tube et qui servent chacune d'interface avec un pied 31 à 33 du tripode, plus exactement avec sa couronne d'orientation 39 comme détaillée ci-après. L'arrière du tube comprend également une platine d'interface avec la couronne d'orientation 35 simultanée des trois pieds.

La structure du sous-châssis avant est montrée en détail en figure 3B. Il s'agit essentiellement d'un tube s'étendant selon un axe longitudinal X' dont le diamètre intérieur permet le passage des tuyaux d'alimentation en fluides et en électricité des différents composants du robot 1. L'arrière du tube comprend une platine d'interface avec le joint de cardan central 5. La partie centrale du tube comprend trois platines d'interface réparties à 120° l'une de l'autre sur la périphérie du tube et qui servent chacune d'interface avec un pied 41 à 43 du tripode, plus exactement avec sa couronne d'orientation 49 comme détaillée ci-après. L'avant du tube comprend également une platine d'interface avec la couronne de rotation 81 du bras-support 8. Comme montré en figures 1 et 2, en plus des pieds 41 à 43, le sous-châssis avant 4 supporte les moteurs de rotation 82 et de translation télescopique 84 du bras-support 8.

La structure du joint de cardan central 5 est montrée en détail en figure 3C. Cette structure est évidée intérieurement pour permettre le passage des tuyaux d'alimentation en fluides et en électricité des différents composants du robot 1, en assurant la continuité avec les tubes des sous-châssis 3 et 4. Chaque axe 50 et 51 du cardan peut être déplacé en rotation par un vérin de direction 6 et 7.

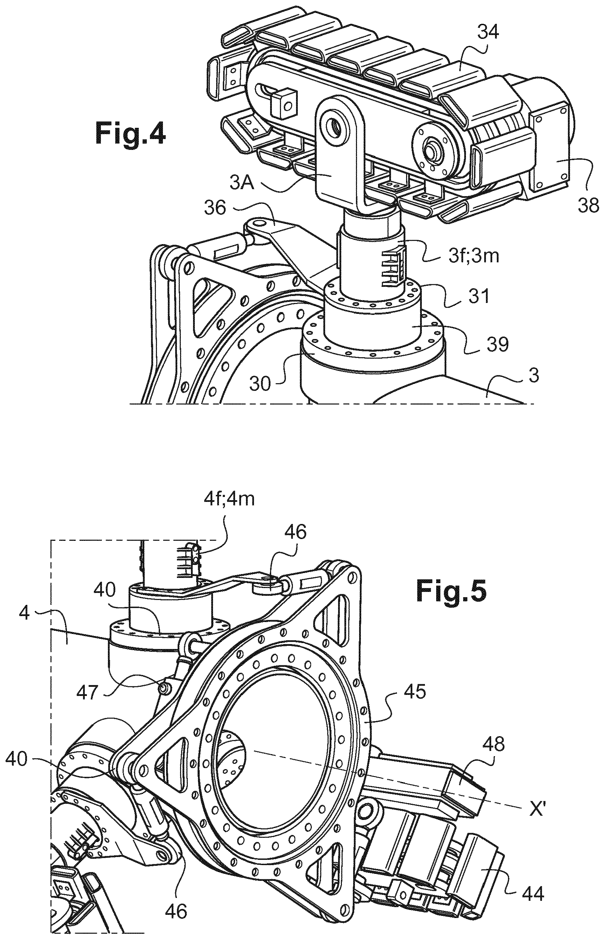

On a représenté plus en détail en figures 4 et 5, un pied de déplacement du robot 1 ainsi qu'une couronne d'orientation 35 ou 45 d'orientation simultanée des trois pieds d'un même tripode. L'ensemble des pieds 31, 32, 33, 41, 42, 43 sont identiques. Ainsi la description pour un pied 31 vaut pour les autres.

Le pied 31 est monté rotatif autour de son axe Y1 par l'intermédiaire d'une couronne 30. La chenille 34 à l'extrémité libre du pied 31 est montée avec son moteur d'entraînement indépendant 38 pivotante autour d'un pivot 3A qui permet de faire pivoter ladite chenille 34, à 180° autour de son axe Y1 et donc d'inverser le sens de déplacement du robot 1.

De manière avantageuse, le pied 31 comprenant une rallonge réglable 39 pour permettre de régler la longueur du pied selon son axe longitudinal Y1 afin d'ajuster le tripode au diamètre de la conduite forcée.

Comme illustré dans l'exemple de ces figure 4 et 5, chaque pied 31, 41 est reliée par l'intermédiaire de deux bielles de liaison 36, 46 à la couronne 35, 45.

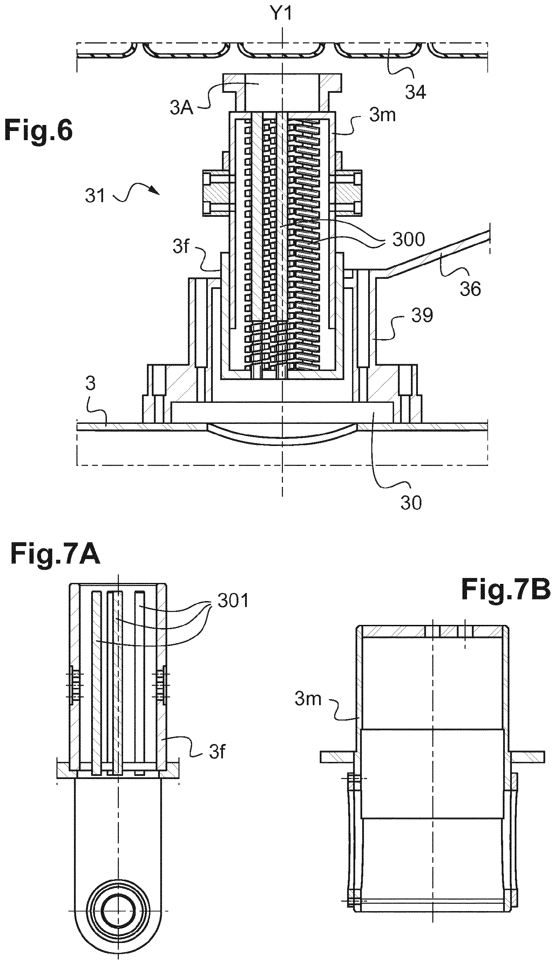

On a illustré en figures 6, 7A, et 7B, une variante avantageuse de pied 31 selon laquelle il est monté sur une boite à ressorts adaptée pour permettre le maintien en pression de la chenille 34 contre la paroi de la conduite dans laquelle le robot 1 se déplace. Cette boite à ressorts comprend une partie sous la forme d'un fourreau fixée 3f au sous-châssis 3 et une partie mobile également sous la forme d'un fourreau 3m en translation selon l'axe longitudinal Y1 du pied.

La partie mobile 3m supporte ici la chenille 34, son moteur d'entraînement 38 et la rallonge réglable 39. La partie fixe 3f est emboitée à l'intérieur de la partie mobile 3m de sorte à formant un logement de plusieurs ressorts de compression 300. Chaque ressort de compression 300 est emmanché autour d'un axe fixe 301 du fourreau fixe 3f. L'effort constant exercé par ces ressorts 300 contre le fond du fourreau mobile 3m va permettre de maintenir un écartement entre fourreau mobile 3m et fourreau fixe 3f, et par-là le maintien de la pression d'appui de la chenille 34 contre la paroi de la conduite.

On décrit maintenant le fonctionnement du déplacement du robot 1 selon l'invention, pour éviter le changement indésirable d'orientation longitudinale par rapport à la conduite forcée dans laquelle il se déplace et ce pour cause de dérive lente ou de passage d'un coude.

L'opérateur actionne à distance l'un et/ou l'autre des vérins d'orientation 37, 47, ce qui provoque la rotation de la couronne 35, 45 à laquelle il est lié. Les efforts de pivotement sont transmis simultanément aux trois pieds 31 à 33, 41 à 43 d'un même tripode par l'intermédiaire des bielles 36, 46.

Ainsi, il en résulte un pivotement simultané des trois pieds 31 à 33, 41 à 43 d'un même tripode autour de leur axe longitudinal respectif Y1 à Y3; Y'1 à Y'3. Typiquement, une correction d'orientation d'une valeur d'angle allant jusqu'à 5° pour les pieds permet d'éviter de manière efficace et rapide tout changement d'orientation longitudinal non souhaité du robot 1.

On décrit maintenant un mode de fonctionnement avantageux du robot 1 au passage d'un coude de conduite.

Lorsque le robot 1 avance dans le coude, l'axe X ou X' de l'un des sous-châssis 3, 4, va se décaler par rapport à l'axe théorique de la conduite forcée.

On détecte alors avantageusement ce décalage induit par le coude (le changement de rayon de courbure de la conduite) par au moins un de deux systèmes à balayage laser placés l'un sur le sous-châssis arrière 3, l'autre sur le sous-châssis avant 4.

On actionne alors l'un et/ou l'autre des vérins de direction 6, 7, ce qui provoque la rotation de l'un 50 et/ou l'autre 51 des axes du cardan 5 et donc le pivotement d'un des sous-châssis 3 par rapport à l'autre 4 selon un ou deux degrés de liberté. Cela permet de ramener très rapidement l'axe X, X' sur l'axe de la conduite.

D'autres variantes et améliorations peuvent être apportées sans pour autant sortir du cadre de l'invention défini par les revendications annexées.

## Revendications

1. Robot (1) pour la rénovation et/ou l'inspection d'une conduite, comprenant un châssis (2) lui-même comprenant :
- deux sous-châssis de déplacement (3 ; 4) s'étendant selon un axe longitudinal (X; X') et supportant chacun trois pieds de déplacement (31 à 33; 41 à 43) formant un tripode, chaque pied du tripode s'étendant selon un axe longitudinal (Y1 à Y3 ; Y'1 à Y'3) et comprenant, à son extrémité libre, une chenille de déplacement (34; 44), destinée à déplacer le robot par appui contre la paroi d'une conduite,
- un sous-châssis de liaison formant joint de cardan (5) reliant les deux sous-châssis de déplacement et adapté pour permettre de pivoter un sous-châssis de déplacement (3) par rapport à l'autre (4) selon deux degrés de liberté;
robot dans lequel au moins un des deux sous-châssis de déplacement supporte en outre :
- une couronne de pivotement (35; 45) montée rotative autour de l'axe longitudinal (X ; X') dudit sous-châssis de déplacement et reliée par au moins une bielle de liaison (36 ; 46) à chaque pied du tripode lui-même monté rotatif autour de son axe longitudinal (Y1 à Y3, Y'1 à Y'3) ;
- au moins un vérin (37 ; 47), dit vérin d'orientation, dont une extrémité est reliée au sous-châssis de déplacement et l'autre extrémité à la couronne, de sorte que son actionnement provoque la rotation de la couronne et par là, par l'intermédiaire des bielles, le pivotement simultané des pieds du tripode autour de leur axe longitudinal respectif (Y1 à Y3; Y'1 à Y'3).

2. Robot selon la revendication 1, chacun des deux sous-châssis de déplacement comprend une couronne de pivotement et au moins un vérin d'orientation, l'actionnement du (des) vérin(s) d'orientation de la couronne de l'un des deux sous-châssis de déplacement étant indépendant de l'autre.

3. Robot selon la revendication 1 ou 2, chaque pied d'un tripode comprenant un moteur d'entraînement (38 ; 48) indépendant de la chenille dudit pied.

4. Robot selon l'une des revendications précédentes, chaque pied d'un tripode comprenant une rallonge réglable (39 ; 49) pour permettre de régler la longueur du pied selon son axe longitudinal afin d'ajuster le tripode au diamètre de la conduite forcée.

5. Robot selon l'une des revendications précédentes, chaque pied d'un tripode comprenant une partie fixée (3f; 4f) au sous-châssis de déplacement et une partie mobile (3m ; 4m) en translation selon l'axe longitudinal du pied, la partie mobile supportant la chenille de déplacement et le cas échéant son moteur d'entraînement et/ou la rallonge réglable étant agencée par rapport à la partie fixe en formant un logement d'un ou plusieurs ressorts de compression (300 ; 400), dite boite à ressort(s), la boite à ressort(s) étant adaptée pour permettre le maintien en pression de la chenille du pied contre la paroi de la conduite.

6. Robot selon l'une des revendications précédentes, comprenant en outre au moins un vérin (6 ; 7), dit vérin de direction, dont une extrémité est reliée à un sous-châssis de déplacement et l'autre extrémité à l'un des axes (50 ; 51) du cardan, de sorte que son actionnement provoque le pivotement dudit sous-châssis de déplacement par rapport à l'autre selon un degré de liberté du joint de cardan.

7. Robot selon l'une des revendications précédentes, un des deux sous-châssis de déplacement supportant un bras-support (8) d'outillage et/ou de caméra d'inspection, le bras-support étant monté rotatif à 360° autour de l'axe longitudinal dudit sous-châssis de déplacement.

8. Robot selon la revendication 7, le bras-support étant en outre monté libre en translation longitudinal selon l'axe longitudinal du sous-châssis de déplacement qui le supporte.

9. Procédé de fonctionnement d'un robot selon l'une des revendications précédentes, en déplacement à l'intérieur d'une conduite, comprenant les étapes suivantes :
- détection et mesure d'un angle de dérive angulaire de l'un et/ou l'autre des sous-châssis de déplacement par rapport à l'axe de la conduite ;
- actionnement du (des) vérin(s) d'orientation, de sorte à provoquer le pivotement simultané des pieds de l'un et/ou l'autre des tripodes, autour de leur axe longitudinal respectif (Y1 à Y3; Y'1 à Y'3).

10. Utilisation d'un robot selon l'une quelconque des revendications 1 à 8 pour la rénovation avec décapage, de préférence par grenaillage, et le cas échéant avec revêtement de peinture d'une conduite forcée.

## Patentansprüche

1. Roboter (1) zur Sanierung und/oder Inspektion einer Rohrleitung, welcher ein Fahrgestell (2) umfasst, das seinerseits umfasst:
- zwei Fahr-Teilgestelle (3; 4), die sich entlang einer Längsachse (X; X') erstrecken und jeweils drei Fahrfüße (31 bis 33; 41 bis 43) tragen, die ein Dreibein bilden, wobei sich jeder Fuß des Dreibeins entlang einer Längsachse (Y1 bis Y3; Y'1 bis Y'3) erstreckt und an seinem freien Ende eine Fahrkette (34; 44) umfasst, die dazu bestimmt ist, den Roboter durch Abstützung an der Wand einer Rohrleitung zu verfahren,
- ein Verbindungs-Teilgestell, das ein Kardangelenk (5) bildet, das die zwei Fahr-Teilgestelle verbindet und dafür ausgelegt ist zu ermöglichen, ein Fahr-Teilgestell (3) in Bezug auf das andere (4) in zwei Freiheitsgraden zu schwenken;
wobei bei diesem Roboter wenigstens eines der zwei Fahr-Teilgestelle außerdem trägt:
- einen Drehkranz (35; 45), der um die Längsachse (X; X') des Fahr-Teilgestells drehbar gelagert ist und über wenigstens eine Verbindungsstange (36; 46) mit jedem Fuß des Dreibeins verbunden ist, der seinerseits um seine Längsachse (Y1 bis Y3; Y'1 bis Y'3) drehbar gelagert ist;
- wenigstens einen Zylinder (37; 47), Schwenkzylinder genannt, dessen eines Ende mit dem Fahr-Teilgestell und dessen anderes Ende mit dem Drehkranz verbunden ist, so dass seine Betätigung die Drehung des Drehkranzes und dadurch, über Stangen, die gleichzeitige Schwenkung der Füße des Dreibeins um ihre jeweiligen Längsachsen (Y1 bis Y3; Y'1 bis Y'3) hervorruft.

2. Roboter nach Anspruch 1, wobei jedes Fahr-Teilgestell einen Drehkranz und wenigstens einen Schwenkzylinder umfasst, wobei die Betätigung des (der) Schwenkzylinder(s) des Drehkranzes des einen der zwei Fahr-Teilgestelle unabhängig vom anderen ist.

3. Roboter nach Anspruch 1 oder 2, wobei jeder Fuß eines Dreibeins einen unabhängigen Antriebsmotor (38; 48) der Kette des Fußes umfasst.

4. Roboter nach einem der vorhergehenden Ansprüche, wobei jeder Fuß eines Dreibeins eine verstellbare Verlängerung (39; 49) umfasst, um zu ermöglichen, die Länge des Fußes entlang seiner Längsachse zu verstellen, um das Dreibein an den Durchmesser der Druckrohrleitung anzupassen.

5. Roboter nach einem der vorhergehenden Ansprüche, wobei jeder Fuß eines Dreibeins einen an dem Fahr-Teilgestell befestigten Teil (3f; 4f) und einen entlang der Längsachse des Fußes translatorisch bewegbaren Teil (3m; 4m) umfasst, wobei der bewegbare Teil die Fahrkette und gegebenenfalls deren Antriebsmotor trägt, und/oder wobei die verstellbare Verlängerung in Bezug auf den festen Teil so ausgebildet ist, dass sie einen Aufnahmeraum für eine oder mehrere Druckfedern (300; 400) bildet, Federgehäuse genannt, wobei das Federgehäuse dafür ausgelegt ist, die Aufrechterhaltung eines Drucks zu ermöglichen, der die Kette des Fußes gegen die Wand der Rohrleitung drückt.

6. Roboter nach einem der vorhergehenden Ansprüche, welcher außerdem wenigstens einen Zylinder (6; 7), Richtungszylinder genannt, umfasst, dessen eines Ende mit einem Fahr-Teilgestell und dessen anderes Ende mit einer der Achsen (50; 51) des Kardangelenks verbunden ist, so dass seine Betätigung die Schwenkung des Fahr-Teilgestells in Bezug auf das andere in einem Freiheitsgrad des Kardangelenks hervorruft.

7. Roboter nach einem der vorhergehenden Ansprüche, wobei eines der zwei Fahr-Teilgestelle einen Tragarm (8) für Werkzeuge und/oder eine Inspektionskamera trägt, wobei der Tragarm um 360° um die Längsachse des Fahr-Teilgestells drehbar gelagert ist.

8. Roboter nach Anspruch 7, wobei der Tragarm außerdem entlang der Längsachse des Fahr-Teilgestells, welches ihn trägt, frei translatorisch bewegbar angebracht ist.

9. Verfahren zum Betreiben eines Roboters nach einem der vorhergehenden Ansprüche bei der Bewegung im Inneren einer Rohrleitung, welches die folgenden Schritte umfasst:
- Erkennung und Messung eines Winkels der Winkeldrift des einen und/oder des anderen der Fahr-Teilgestelle in Bezug auf die Achse der Rohrleitung;
- Betätigung des (der) Schwenkzylinder(s), um die gleichzeitige Schwenkung der Füße des einen und/oder des anderen der Dreibeine um seine jeweilige Längsachse (Y1 bis Y3; Y'1 bis Y'3) hervorzurufen.

10. Verwendung eines Roboters nach einem der Ansprüche 1 bis 8 zur Sanierung, mit Entrosten, vorzugsweise durch Kugelstrahlen, und gegebenenfalls mit Farbbeschichtung, einer Druckrohrleitung.

## Claims

1. Robot (1) for renovating and/or inspecting a pipe, comprising a frame (2) which itself comprises:
- two moving sub-frames (3; 4) extending along a longitudinal axis (X; X') and each supporting three moving feet (31 to 33; 41 to 43) forming a tripod, each foot of the tripod extending along a longitudinal axis (Y1 to Y3; Y'1 to Y'3) and comprising: at its free end, a moving track (34; 44), intended to move the robot by bearing against the wall of a pipe,
- a link sub-frame forming a cardan joint (5) linking the two moving sub-frames and adapted to make it possible to pivot one moving sub-frame (3) relative to the other (4) according to two degrees of freedom;
a robot in which at least one of the two moving sub-frames also supports:
- a pivoting crown ring (35; 45) mounted to rotate about the longitudinal axis (X; X') of said moving sub-frame and linked by at least one link rod (36; 46) to each foot of the tripod which is itself mounted to rotate about its longitudinal axis (Y1 to Y3; Y'1 to Y'3);
- at least one cylinder (37; 47), called orientation cylinder, of which one end is linked to the moving sub-frame and the other end is linked to the crown ring, so that its actuation provokes the rotation of the crown ring, and, thereby, via rods, the simultaneous pivoting of the feet of the tripod about their respective longitudinal axis (Y1 to Y3; Y'1 to Y'3).

2. Robot according to Claim 1, each of the two moving sub-frames comprises a pivoting crown ring and at least one orientation cylinder, the actuation of the orientation cylinder(s) of the crown ring of one of the two moving sub-frames being independent of the other.

3. Robot according to Claim 1 or 2, each foot of a tripod comprising a drive motor (38; 48) independent of the track of said foot.

4. Robot according to one of the preceding claims, each foot of a tripod comprising an adjustable extension (39; 49) to make it possible to set the length of the foot along its longitudinal axis in order to adjust the tripod to the diameter of the penstock.

5. Robot according to one of the preceding claims, each foot of a tripod comprising a part (3f; 4f) fixed to the moving sub-frame and a part (3m; 4m) that is translationally mobile along the longitudinal axis of the foot, the mobile part supporting the moving track and, if necessary, its drive motor and/or the adjustable extension being arranged relative to the fixed part forming a housing for one or more compression springs (300; 400), called spring box, the spring box being adapted to allow the track of the foot to be held by pressure against the wall of the pipe.

6. Robot according to one of the preceding claims, also comprising at least one cylinder (6; 7), called steering cylinder, of which one end is linked to a moving sub-frame and the other end is liked to one of the axes (50; 51) of the cardan joint, such that its actuation provokes the pivoting of said moving sub-frame relative to the other according to a degree of freedom of the cardan joint.

7. Robot according to one of the preceding claims, one of the two moving sub-frames supporting a tool and/or inspection camera support arm (8), the support arm being mounted to rotate 360° about the longitudinal axis of said moving sub-frame.

8. Robot according to Claim 7, the support arm being also mounted with free longitudinal translation along the longitudinal axis of the moving sub-frame which supports it.

9. Method for operating a robot according to one of the preceding claims, in movement inside a pipe, comprising the following steps:
- detection and measurement of an angle of angular drift of one and/or the other of the moving sub-frames relative to the axis of the pipe;
- actuation of the orientation cylinder(s), so as to provoke the simultaneous pivoting of the feet of one and/or the other of the tripods, about their respective longitudinal axis (Y1 to Y3; Y'1 to Y'3).

10. Use of a robot according to any one of Claims 1 to 8 for the renovation with descaling, preferably by shot blasting, and, if necessary, with paint coating of a penstock.
